# EUROPEAN PATENT SPECIFICATION

(11) **EP 3 076 330 B1**
(45) Date of publication and mention of the grant of the patent: **04.11.2020**
(21) Application number: 16162507.4
(22) Date of filing: 28.03.2016
(51) Int. Cl.: G06K 7/10

(54) **AIMER FOR BARCODE SCANNING**
ZIELEINRICHTUNG ZUM STRICHCODESCANNEN
VISEUR POUR BALAYAGE DE CODES-BARRES

(30) Priority: 31.03.2015 US 201514674329
(43) Date of publication of application: 05.10.2016
(73) Proprietor: Hand Held Products, Inc., Fort Mill, SC 29707 (US)
(72) Inventor: BIDWELL, Dean Jeffrey, Morris Plains, NJ 07950 (US)
(74) Representative: Haseltine Lake Kempner LLP

(56) References cited:
- EP-A1- 2 916 259
- US-A1- 2003 019 934
- US-A1- 2012 154 607
- US-A1- 2013 161 397
- US-A1- 2014 104 416
- US-A1- 2014 217 180
- US-A1- 2014 312 121
- US-A1- 2015 001 302

## Description

### FIELD OF THE INVENTION

The present invention relates to barcode scanning and, more specifically, to an aimer for facilitating the alignment of a camera for barcode scanning.

### BACKGROUND

Mobile computing devices, such as smartphones, may be configured by software applications to scan barcodes. These applications may configure a smartphone's integrated camera to capture an image of a barcode, process the captured image, and recognize and decode the barcode. Historically, imaging with a smartphone has been relatively slow due to autofocusing and high-resolution image processing. This lack of speed has limited the usefulness of a smartphone as a barcode scanner, especially when routine barcode scanning is required.

Routine barcode scanning with a smartphone is also limited by the awkwardness associated with targeting a barcode. Since the smartphone's display must be used as a viewfinder, the user must focus on the smartphone's screen and not on the barcode. This approach may be difficult if the image on the screen is unfocused/underexposed (i.e., dark) or if the smartphone must be oriented with the screen turned away from the user (e.g., scanning barcodes in tight areas).

Imaging with a smartphone's built-in camera has improved in recent years. Today's smartphone cameras allow for faster and more reliable focusing. The processing power in smartphones has improved and can better handle high-resolution imaging. As a result, smartphones are now more viable for barcode scanning, but they are still limited by the awkwardness associated with aiming.

Barcode scanners designed for routine scanning (i.e., professional or enterprise-grade scanners) typically utilize an aimer. The aimer uses a projector to cast a visible pattern onto a barcoded item. The user aligns the projected pattern with the barcode to insure proper scanning. An aimer integrated with a smartphone would allow the smartphone to operate much like an enterprise-grade scanner and would be highly desirable to users seeking versatile and cost efficient barcode scanners.

Therefore, a need exists for an aimer integrated with a smartphone to allow the smartphone to target barcodes easily, quickly, and accurately.

EP2916259A1 discloses an indicia-reading module capable of integration into the smallest face of thin-profile smart device. The module employs chip-on-board packaging and a customized sensor enclosure to eliminate the stack-up height found in conventional packaging.

US2003019934A1 discloses an imaging module including an aiming system having a light source, an aperture and an optical element for projecting an aiming pattern onto a target; and the integration of the same in to a mobile telephone.

### SUMMARY

According to the present invention, there is provided an aimer and a phone as defined in the accompanying claims.

The foregoing illustrative summary, as well as other exemplary objectives and/or advantages of the invention, and the manner in which the same are accomplished, are further explained within the following detailed description and its accompanying drawings.

### BRIEF DESCRIPTION OF THE DRAWINGS

Figure (Fig.) 1 graphically depicts a barcode scanning system according to an embodiment of the present invention.
Fig. 2 graphically depicts an exploded view of a case for a smartphone according to an embodiment of the present invention.
Fig. 3 graphically depicts an aimer according to an embodiment of the present invention.
Fig. 4 graphically depicts a case with an integrated aimer and battery according to an embodiment of the present invention.

### DETAILED DESCRIPTION

The present invention embraces an aimer that helps a user to position and scan (i.e., read, decode, etc.) a barcode (e.g., linear barcode, matrix code, etc.) using a mobile computing device (e.g., smartphone, tablet, etc.) with an integrated imaging system (i.e., camera, illumination, processing, and software).

Users who scan barcodes regularly (e.g., as part of their daily work) need barcode scanners that respond quickly. Often these users work in environments (e.g., warehouses, delivery trucks, etc.) that make conventional imaging difficult. For example, these environments may be dark, and they may make holding a camera steady difficult. What is more, the barcodes for scanning may not always be accessible. For example, a user may have to reach around something to scan a barcode. In these cases, using the mobile computing device's imaging system for barcode scanning may be difficult.

Mobile computing devices typically have an imaging system designed for an average consumer. As a result, certain design compromises have been made. For example, the imaging subsystem (i.e., imager) must often share processing resources with other subsystems and software. As a result, imaging with a mobile computing device, while fine for the average consumer, has often been too slow and of too poor a quality to be used for serious photography and/or for the special purposes (e.g., barcode scanning). As a result, special purposed equipment (e.g., barcode scanning sleds) with specialized imaging systems have been used to enable mobile computing devices to scan barcodes.

In recent years, due in part to the economies of scale and active development, the imaging systems in mobile computing devices have improved and may now be used for barcode scanning. The problem now facing mobile computing devices used as barcode scanners concerns their ease of use.

Capturing an image of a barcode with a mobile computing device requires a user to align the barcode within a designated region on the mobile computing device's screen. Using the screen as viewfinder is often an awkward process (e.g., in low light, unfocused images, etc.). As a result, capturing a barcode image suitable for decoding often requires more than one attempt. In addition, the need for the user to focus on the screen makes barcode scanning difficult if the screen must be turned away from the user.

Enterprise-grade barcode scanners rarely use a viewfinder to align a barcode. Instead, they use an aimer, which projects a visible light pattern onto the barcode. The projected pattern corresponds to the field of view of the camera so that when the projected pattern is aligned with a barcode, an image that is suitable for barcode scanning may be captured. A user can easily point the projected pattern at a barcode, while maintaining focus on the barcode. There is a current, yet unmet need for a mobile computing device accessory (i.e., add-on) or subsystem to facilitate the same barcode-targeting scheme typically found only in enterprise-grade barcode scanners.

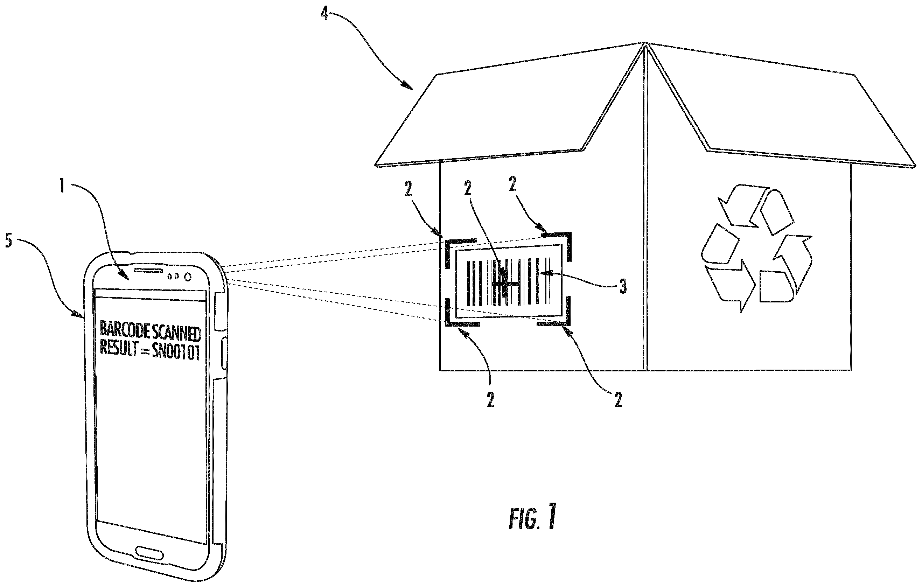

An exemplary embodiment of a barcode scanning system using an aimer is shown in Fig. 1. The system includes a smartphone 1. The smartphone 1 is installed into a case that has an integrated aimer to help target a barcode for scanning.

The smartphone 1 has an integrated camera for capturing images of a field of view. The integrated camera may use a lens or lens group to form a real image on a sensor. The camera's sensor may be a charge-coupled device (CCD) comprising an array of light sensitive capacitors that gather a charge resulting from incident photons. The sensor may also use an active pixel sensor array constructed using complementary metal oxide semiconductor (CMOS) technology. The sensor may capture black and white (B/W) images or may capture color images by using color filters (e.g., Bayer filter) arranged over the pixel array. The camera may use various types of electronic shutters (e.g., frame transfer, rolling shutters, etc.) to expose the sensor's pixels to light. The smartphone 1 may utilize a synchronized light source (e.g., flash) for illuminating the camera's field of view. This flash may be integrated with the smartphone or electronically attached to the smartphone as an accessory.

The smartphone includes a processor to enable the functions of the smartphone (e.g., operating system functions, input/output functions, and functions enabled by software applications). The smartphone's processor may be embodied as a system on a chip (SoC) comprising a central processing core (or cores), a graphics processor, an audio processor, and/or a video processor. The processor is configured by software applications stored in a memory (e.g., internal or external to the smartphone) to perform a variety of functions.

The processor may be configured by an application for barcode scanning. This barcode scanning application may control aspects related to targeting a barcode, imaging a barcode, processing an image, recognizing a barcode within an image, and/or decoding a barcode. The barcode scanning application may be configured to read various types of barcodes (e.g., linear barcodes, two-dimensional barcodes, color barcodes, etc.). The barcode scanning application may provide a graphical user interface (GUI) to allow a user to interact with the program (e.g., trigger a scan, read results, etc.). The barcode scanning program may store the barcode results in the smartphone's memory or may transmit the results to a host device. As a result, the barcode scanning application may also interface with other computer systems that are communicatively coupled to the smartphone (e.g., wireless computer network, cellular network, etc.).

It should be noted that while the case 5 shown in Fig. 1 may include the subsystems, modules, and/or components necessary for aiming (i.e., an aimer), the aimer might also be integrated within the smartphone's body.

The aimer includes a light source module for creating a light beam when activated (e.g., electrically powered). In some possible embodiments, the light source module may include a light emitting diode (LED) or an array of LEDs. The array of LEDs may be an array of the same LED or an array of different LEDs configured to generate different wavelengths of light. In other possible embodiments, the light source module may include a laser (e.g., laser diode). In any case, the light created by the light source module is a wavelength, or band of wavelengths, within the visible spectrum. In some embodiments, the light source module also includes a lens (or lenses) to collimate (or otherwise condense) the light radiated from the light source.

The aimer includes a projection module for forming the light beam from the light source module into an aiming pattern (i.e., pattern) and for projecting the pattern onto a target (e.g., barcode). The projection module may include a lens (or lenses), an aperture, and/or a diffractive optical element (DOE) to help form the pattern. In some embodiments, the projection module may include a mirror (or mirrors) to redirect and/or shape the light beam/pattern.

The pattern created by the aimer's projection module provides feedback regarding the camera's field of view so that when the pattern 2 is projected onto a target (e.g., a barcode 3), a user may understand what is being imaged and how that image will be aligned. To this end, the pattern may indicate the center of the camera's field of view, the edges of the camera's field of view, and/or the corners of the camera's field of view. Thus, patterns may include one or more of the following elements: a cross, a box, a line, or a corner. In a possible embodiment, the pattern may help a user to adjust the distance between the smartphone 1 and the barcoded object 4. For example, the focus of a pattern may provide information regarding the camera's ability to focus the barcode.

The aimer also includes an electronic module. The electronic module controls the power and operation of the aimer. The electronic module may include circuitry or components (e.g., microcontroller) that are communicatively coupled to the smartphone's processor and the light source module. The electronic module may also include a user input apparatus (e.g., button) to allow a user to initiate aiming and/or scanning. The electronic module may sense or otherwise receive an indication that a user has pressed the aiming button. Pressing the button may activate the light source module and may trigger a response from the mobile computing device (e.g., smartphone). For example, pressing the button may cause a smartphone to activate a barcode scanning application.

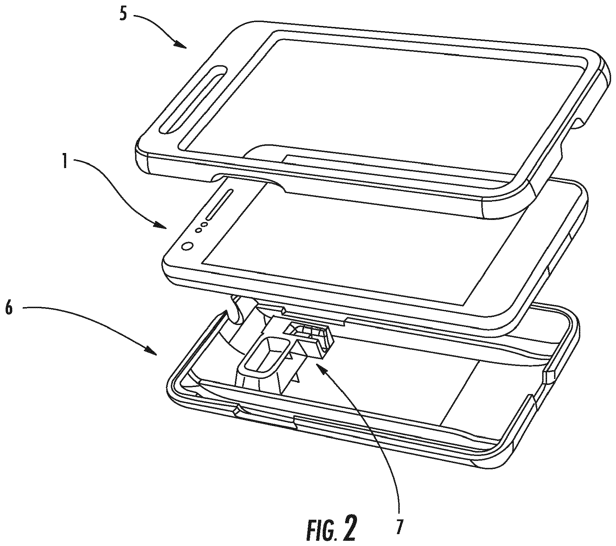

As mentioned previously, the aimer may be incorporated within a case for a smartphone 1. Fig. 2 graphically depicts an exploded view of an exemplary smartphone 1 and an exemplary case 5,6. Here the case 5,6 has a two-part shell. A front shell 5 and a back shell 6 (referred to collectively as the shell or housing) may be connected together (e.g., snap-fit) to contiguously surround (i.e., form fit) the smartphone 1. The case 5,6 typically supports and positions the modules for the aimer.

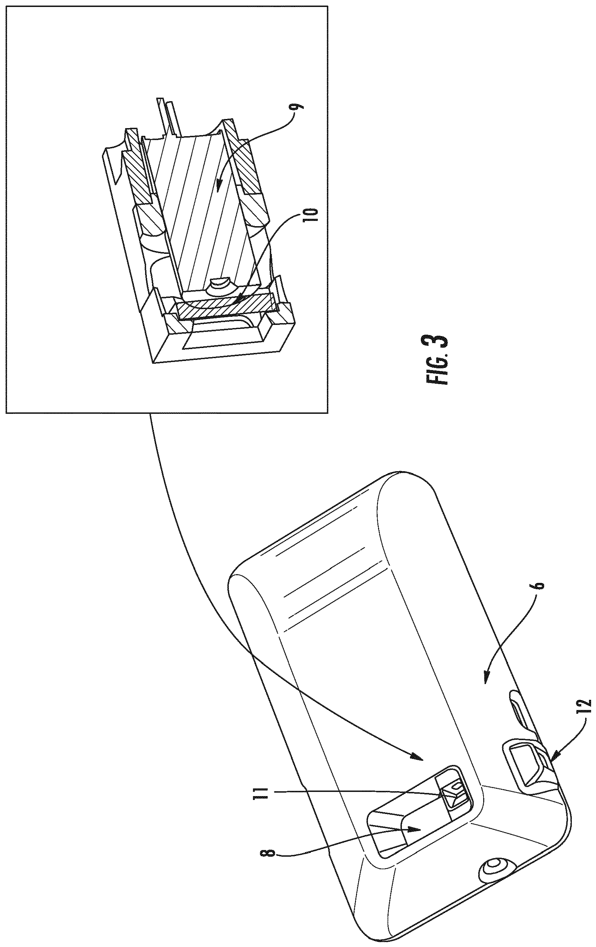

Fig. 3 graphically depicts the outer surface of the back shell 6. An aperture 8 in the back shell 6 allows the smartphone's integrated camera to have visual access to a field of view. The aimer's light source module is supported and positioned by the back shell 6 between the shell's outer surface and the smartphone body (i.e., inside the shell). The light source module is shown as an inset to Fig. 3. The exemplary light source module 9 shown includes a laser diode and a collimating lens to form a light beam. Also shown in the inset is a diffractive optical element 10 (DOE). The DOE 10 shown is used to form and project the pattern along an optical path. The optical path is redirected towards the barcode by a mirror 11.

The exemplary shell 6 (i.e., housing) also includes a switch 12 that may be pressed to initiate the aiming and/or scanning. When pressed, the switch 12 activates the aimer and may trigger the smartphone to respond. In one embodiment, the switch is connected between the light source 9 and a power source (e.g., battery). When the switch is pressed, the light source is activated by connecting the light source to the power source.

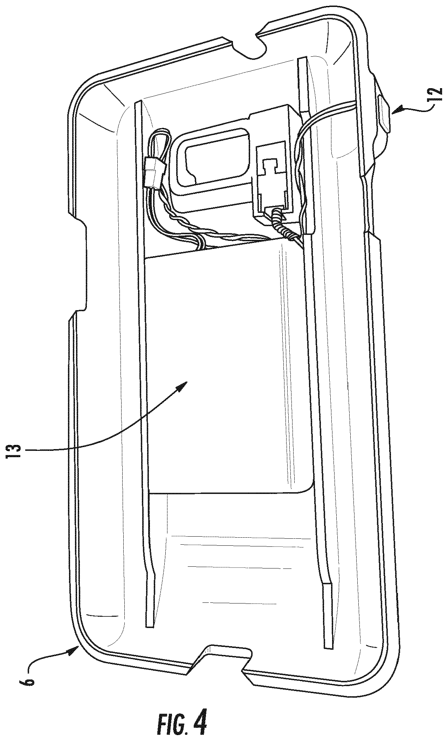

A power source is used to energize and enable the aimer. The power source may be the smartphone's battery or may be a separate battery integrated with the case (e.g., inside the case). Fig 4 graphically depicts a case shell 6 with a battery 13 for powering the aimer according to an embodiment of the present invention.

The aimer may include an electronic module to (i) control the light source module (e.g., by connecting, conditioning, and/or distributing power from a power source) and (ii) communicate with the smartphone. For example, the electronic module may monitor the status of the switch 12. When the switch is pressed, the electronic module may activate (e.g., via switching) the light source module and may send a signal (e.g., digital signal) to the smartphone. The signal sent to the smartphone may indicate the switch has been pressed, implying that a barcode is being targeted. This signal may be used by the smartphone to initiate a barcode scan. For example, the smartphone may launch a barcode scanning program.

In another possible embodiment, the electronic module may receive signals from the smartphone 1. For example, the smartphone may transmit a signal to indicate that a barcode has been successfully scanned. This signal may cause the electronic module to deactivate, or otherwise adjust, the light source. For example, the light source may be changed (e.g., intensity/color adjusted) to provide feedback that the barcode has been scanned.

## Claims

1. An aimer for a phone (1), the phone having a camera for barcode (3) scanning, the aimer comprising:
a light source module (9) for creating a light beam when activated;
a projection module for forming the light beam into a pattern (2);
an electronic module electrically connected to the light source module (9) for controlling and powering the light source module; and
a housing (6) for supporting the light source module (9), the projection module, and the electronic module,
**characterized in that** the housing (6) is configured to removably mount to the phone (1) so that:
the light source module is positioned between an outer surface of the housing and a body of the phone, the projection module is positioned for steering and projecting the pattern (2) into an area (3) aligned with the camera's field of view and the electronic module is positioned to electrically connect and communicate with the phone (1).

2. The aimer according to claim 1, comprising a battery (13) affixed to the housing (6) and electrically connected to the electronic module for energizing the aimer.

3. The aimer according to claim 1, wherein the projection module comprises a mirror (11).

4. The aimer according to claim 1, wherein the projection module comprises a lens.

5. The aimer according to claim 1, wherein the electronic module comprises a switch (12) built into the housing (6) that, when pressed, causes the electronic module to activate the light source module (9) and signal the phone (1) that the aimer has been activated.

6. The aimer according to claim 1, wherein the electronic module receives power from the phone's battery (13).

7. The aimer according to claim 1, wherein the housing is a formfitting case (5, 6) surrounding the phone (1).

8. The aimer according to claim 1, wherein the light source module (9) comprises a laser.

9. The aimer according to claim 1, wherein the light source module (9) comprises one or more light emitting diodes, LED.

10. A phone (1) having an aimer as claimed in any preceding claim mounted thereto.

## Patentansprüche

1. Zieleinrichtung für ein Telefon (1), wobei das Telefon eine Kamera zum Scannen eines Strichcodes (3) aufweist, wobei die Zieleinrichtung umfasst:
ein Lichtquellenmodul (9) zum Erzeugen eines Lichtstrahls bei Aktivierung;
ein Projektionsmodul zum Bilden des Lichtstrahls zu einem Muster (2);
ein elektronisches Modul, das elektrisch mit dem Lichtquellenmodul (9) verbunden ist, um das Lichtquellenmodul zu steuern und mit Strom zu versorgen; und
ein Gehäuse (6) zur Unterstützung des Lichtquellenmoduls (9), des Projektionsmoduls und des elektronischen Moduls,
**dadurch gekennzeichnet, dass** das Gehäuse (6) konfiguriert ist, um abnehmbar an dem Telefon (1) montiert zu werden, sodass:
das Lichtquellenmodul zwischen einer Außenfläche des Gehäuses und einem Körper des Telefons positioniert ist, das Projektionsmodul so positioniert ist, dass es das Muster (2) in einen Bereich (3) lenkt und projiziert, der auf das Sichtfeld der Kamera ausgerichtet ist, und das elektronische Modul so positioniert ist, dass es elektrisch verbunden ist und mit dem Telefon (1) kommuniziert.

2. Zieleinrichtung nach Anspruch 1, umfassend eine Batterie (13), die an dem Gehäuse (6) angebracht und elektrisch mit dem elektronischen Modul verbunden ist, um die Zieleinrichtung mit Strom zu versorgen.

3. Zieleinrichtung nach Anspruch 1, wobei das Projektionsmodul einen Spiegel (11) umfasst.

4. Zieleinrichtung nach Anspruch 1, wobei das Projektionsmodul eine Linse umfasst.

5. Zieleinrichtung nach Anspruch 1, wobei das elektronische Modul einen in das Gehäuse (6) eingebauten Schalter (12) umfasst, der, wenn er gedrückt wird, bewirkt, dass das elektronische Modul das Lichtquellenmodul (9) aktiviert und dem Telefon (1) signalisiert, dass das Zielgerät aktiviert wurde.

6. Zieleinrichtung nach Anspruch 1, wobei das elektronische Modul Strom von der Batterie des Telefons (13) erhält.

7. Zieleinrichtung nach Anspruch 1, wobei das Gehäuse eine formangepasste Hülle (5, 6) ist, die das Telefon (1) umgibt.

8. Zieleinrichtung nach Anspruch 1, wobei das Lichtquellenmodul (9) einen Laser umfasst.

9. Zieleinrichtung nach Anspruch 1, wobei das Lichtquellenmodul (9) eine oder mehrere Leuchtdioden, LED, umfasst.

10. Telefon (1), das eine Zielvorrichtung nach einem der vorstehenden Ansprüche aufweist, die daran befestigt ist.

## Revendications

1. Viseur pour téléphone (1), le téléphone ayant une caméra pour le balayage des codes-barres (3), le viseur comprenant :
un module de source lumineuse (9) pour créer un faisceau lumineux lorsqu'il est activé ;
un module de projection pour former le faisceau lumineux en un motif (2) ;
un module électronique connecté électriquement au module de source lumineuse (9) pour commander et alimenter le module de source lumineuse ; et
un boîtier (6) pour supporter le module de source lumineuse (9), le module de projection et le module électronique,
**caractérisé en ce que** le boîtier (6) est configuré pour être monté de manière amovible sur le téléphone (1) de sorte que :
le module de source lumineuse soit placé entre une surface extérieure du boîtier et un corps du téléphone, le module de projection soit placé pour diriger et projeter le motif (2) dans une zone (3) alignée sur le champ de vision de la caméra et le module électronique soit placé pour se connecter électriquement au téléphone (1) et communiquer avec celui-ci.

2. Viseur selon la revendication 1, comprenant une batterie (13) fixée au boîtier (6) et connectée électriquement au module électronique pour alimenter le viseur.

3. Viseur selon la revendication 1, dans lequel le module de projection comprend un miroir (11).

4. Viseur selon la revendication 1, dans lequel le module de projection comprend une lentille.

5. Viseur selon la revendication 1, dans lequel le module électronique comprend un interrupteur (12) intégré dans le boîtier (6) qui, lorsqu'il est enfoncé, amène le module électronique à activer le module de source lumineuse (9) et à signaler au téléphone (1) que le viseur a été activé.

6. Viseur selon la revendication 1, dans lequel le module électronique est alimenté par la batterie du téléphone (13).

7. Viseur selon la revendication 1, dans lequel le boîtier est un étui (5, 6) entourant le téléphone (1).

8. Viseur selon la revendication 1, dans lequel le module de source lumineuse (9) comprend un laser.

9. Viseur selon la revendication 1, dans lequel le module de source lumineuse (9) comprend une ou plusieurs diodes électroluminescentes, DEL.

10. Téléphone (1) ayant un viseur selon l'une quelconque des revendications précédentes monté sur celui-ci.
